# EUROPEAN PATENT APPLICATION

(11) **EP 3 754 499 A1**
(43) Date of publication of application: **23.12.2020**
(21) Application number: 20175286.2
(22) Date of filing: 18.05.2020
(51) Int. Cl.: G06F 9/50, H04L 12/24

(54) **GENERATING CONFIGURATION TEMPLATES FOR APPLICATION DELIVERY CONTROL**

(30) Priority: 20.05.2019 US 201962850387 P
(71) Applicant: Citrix Systems Inc., Fort Lauderdale, FL 33309 (US)
(72) Inventor: LARIBI, Youcef, Santa Clara, CA 95054 (US); GARIPALLY, Swetha, Santa Clara, CA 95054 (US); REDDY, Chandra Keerthi, Santa Clara, CA 95054 (US)
(74) Representative: Murgitroyd & Company

(57) **Abstract**

Described embodiments provide systems and methods for generating configuration templates. A configuration instance for an application delivery controller can be identified and a plurality of configuration objects. Each configuration object can include a set of instructions for managing network traffic between a plurality of clients and a plurality of servers. A subset of configuration objects can be selected from the plurality of configuration objects. Instance-specific instructions can be removed from each configuration object of the subset. A configuration graph can be generated for each application of the plurality of applications identified in the subset. A match of at least a portion of the configuration graph and a configuration pattern of a plurality of configuration patterns can be identified. A configuration template can be generated including a set of parameters to configure a second application delivery controller to generate instructions for managing network traffic for applications identified in the subset.

## Description

### CROSS-REFERENCE TO RELATED APPLICATION

This patent application claims priority to, and the benefit of, U.S. Provisional Patent Application No. 62/850,387, titled "GENERATING CONFIGURATION TEMPLATES FOR APPLICATION DELIVERY CONTROL," and filed May 20, 2019, the contents of all of which are hereby incorporated herein by reference in its entirety for all purposes.

### BACKGROUND

Devices can include or use a plurality of software applications to perform a variety of different functions. The applications can be built a single, autonomous unit such that the applications are self-contained and independent from other applications executing on a device. However, to update the applications or integrate different applications, changes can impact the entire application or device executing the respective application. For example, a modification to a small section of code can require building and deploying an entirely new version of software for the application.

### BRIEF SUMMARY

The present disclosure is directed towards systems and methods for generating configuration templates. A configuration instance of an application delivery controller can be used to generate a generic configuration template for integrating existing configuration instances and/or generating new configuration instances. In embodiments, one or more existing configuration instances can be selected and configuration objects, parameter and instructions from the one or more configuration instances can be selected. Patterns can be determined from the configuration data from the different configuration instances to identify commonly used objects, parameter and instructions and generate a generic configuration template. The configuration template can be used to regenerate an existing configuration instance and/or generate new configuration instances. For example, the configuration template can be used to regenerate an existing configuration instance and/or generate new configuration instances by modifying one or more parameter values of the configuration template. The configuration template can be used to generate several variants of the same or similar configuration and provide the ability to move an existing configuration to a different configuration instance in the same or different data center, private cloud and/or public cloud. In embodiments, the configuration template can provide a client the ability to manage one or more configuration instances centrally and elevate the configuration abstraction level of existing configurations.

In at least one aspect, a method for generating configuration templates is provided. The method can include identifying, by a device, a configuration instance for a first application delivery controller intermediary to a first plurality of clients and a first plurality of servers. The configuration instance can include a plurality of configuration objects. Each configuration object can include a set of instructions for managing network traffic between the first plurality of client and the first plurality of servers for a plurality of applications. The method can include selecting, by the device, a subset of configuration objects from the plurality of configuration objects in accordance with the set of instructions in each configuration of the plurality of configuration objects. The method can include removing, by the device, from each configuration object of the subset, instance-specific instructions from the set of instructions for the first application delivery controller. The method can include generating, by the device, in accordance with the subset of configuration objects with the instance-specific instructions removed, a configuration graph for each application of the plurality of applications identified in the subset. The method can include identifying, by the device, for each application identified in the subset, a match of at least a portion of the configuration graph and a configuration pattern of a plurality of configuration patterns. Each configuration pattern can be for generating instructions for managing network traffic for the application. The method can include generating, by the device, using the identified configuration patterns, a configuration template for a second application delivery controller intermediary to a second plurality of clients and a second plurality of servers. The configuration template can include a set of parameters to configure the second application delivery controller to generate instructions for managing network traffic for the applications identified in the subset.

In embodiments, the method can include modifying, by the device, one or more parameters of the set of the parameters of the configuration template to generate a configuration instance of the second application delivery controller. The method can include deploying, by the device, the configuration instance of the second application delivery controller in a first network. The second application delivery controller can manage network traffic for the applications in the first network. The method can include modifying, by the device, at least one parameter of the set of the parameters of the configuration instance of the second application delivery controller from a first value indicating a first network to a second value indicating a second network. The method can include migrating, by the device, the configuration instance of the second application delivery controller from the first network to the second network using the configuration template and the modified at least one parameter of the set of the parameters.

The method can include identifying, by the device, one or more configuration patterns of the plurality of configuration patterns having configurations objects used in configurations instances of two or more application delivery controllers. The method can include generating, by the device, a mapping file identifying an association between the set of instructions associated with the configuration instance and the set of parameters of the configuration template. In some embodiments, the method can include generating, by the device, the configuration parameters for the configuration template using the mapping file.

In embodiments, the method can include determining, by the device, that the instance-specific instructions are unique to the single configuration instance of the first application delivery controller and removing, by the device and responsive to the determination, the instance-specific instructions. The method can include comparing, by the device, the configuration graph to one or more configuration patterns of the plurality of configuration patterns. The method can include determining, by the device, the portion of the configuration graph includes configuration objects of the subset of configuration objects in common with the identified configuration pattern of the plurality of configuration patterns.

In at least one aspect, a system for generating configuration templates is provided. The system can include a device intermediary to a plurality of clients and a plurality of servers, and one or more application delivery controllers. The application delivery controllers can be intermediary to the plurality of clients and the plurality of servers. The device can be configured to identify a configuration instance for a first application delivery controller intermediary to a first plurality of clients and a first plurality of servers. The configuration instance can include a plurality of configuration objects. Each configuration object can include a set of instructions for managing network traffic between the first plurality of client and the first plurality of servers for a plurality of applications. The device can be configured to select a subset of configuration objects from the plurality of configuration objects in accordance with the set of instructions in each configuration of the plurality of configuration objects. The device can be configured to remove, from each configuration object of the subset, instance-specific instructions from the set of instructions for the first application delivery controller. The device can be configured to generate, in accordance with the subset of configuration objects with the instance-specific instructions removed, a configuration graph for each application of the plurality of applications identified in the subset. The device can be configured to identify, for each application identified in the subset, a match of at least a portion of the configuration graph and a configuration pattern of a plurality of configuration patterns. Each configuration pattern can be for generating instructions for managing network traffic for the application. The device can be configured to generate, using the identified configuration patterns, a configuration template for a second application delivery controller intermediary to a second plurality of clients and a second plurality of servers. The configuration template can include a set of parameters to configure the second application delivery controller to generate instructions for managing network traffic for the applications identified in the subset.

In embodiments, the device can be further configured to modify one or more parameters of the set of the parameters of the configuration template to generate a configuration instance of the second application delivery controller. The device can be configured to deploy the configuration instance of the second application delivery controller in a first network. The second application delivery controller can manage network traffic for the applications in the first network. The device can be configured to modify at least one parameter of the set of the parameters of the configuration instance of the second application delivery controller from a first value indicating a first network to a second value indicating a second network. The device can be configured to migrate the configuration instance of the second application delivery controller from the first network to the second network using the configuration template and the modified at least one parameter of the set of the parameters.

In some embodiments, the device can be configured to identify one or more configuration patterns of the plurality of configuration patterns having configurations objects used in configurations instances of two or more application delivery controllers. The device can be configured to generate a mapping file identifying an association between the set of instructions associated with the configuration instance and the set of parameters of the configuration template. The device can be configured to generate the configuration parameters for the configuration template using the mapping file. In embodiments, the device can be configured to determine that the instance-specific instructions are unique to the single configuration instance of the first application delivery controller and remove responsive to the determination, the instance-specific instructions. The device can be configured to compare the configuration graph to one or more configuration patterns of the plurality of configuration patterns and determine the portion of the configuration graph includes configuration objects of the subset of configuration objects in common with the identified configuration pattern of the plurality of configuration patterns.

In at least one aspect, a non-transitory computer readable medium storing instructions is provided. The instruction when executed by one or more processors can cause the one or more processors to identify a configuration instance for a first application delivery controller intermediary to a first plurality of clients and a first plurality of servers. The configuration instance can include a plurality of configuration objects. Each configuration object can include a set of instructions for managing network traffic between the first plurality of client and the first plurality of servers for a plurality of applications. The instruction when executed by one or more processors can cause the one or more processors to select a subset of configuration objects from the plurality of configuration objects in accordance with the set of instructions in each configuration of the plurality of configuration objects. The instruction when executed by one or more processors can cause the one or more processors to remove, from each configuration object of the subset, instance-specific instructions from the set of instructions for the first application delivery controller. The instruction when executed by one or more processors can cause the one or more processors to generate, in accordance with the subset of configuration objects with the instance-specific instructions removed, a configuration graph for each application of the plurality of applications identified in the subset. The instruction when executed by one or more processors can cause the one or more processors to identify, for each application identified in the subset, a match of at least a portion of the configuration graph and a configuration pattern of a plurality of configuration patterns. The instruction when executed by one or more processors can cause the one or more processors to generate, using the identified configuration pattern, a configuration template for a second application delivery controller intermediary to a second plurality of clients and a second plurality of servers. The configuration template can include a set of parameters to configure the second application delivery controller to generate instructions for managing network traffic for the plurality of applications identified in the subset.

In some embodiments, the instruction when executed by one or more processors can cause the one or more processors to compare the configuration graph to one or more configuration patterns of the plurality of configuration patterns and determine the portion of the configuration graph includes configuration objects of the subset of configuration objects in common with the identified configuration pattern of the plurality of configuration patterns.

### BRIEF DESCRIPTION OF THE DRAWING FIGURES

Objects, aspects, features, and advantages of embodiments disclosed herein will become more fully apparent from the following detailed description, the appended claims, and the accompanying drawing figures in which like reference numerals identify similar or identical elements. Reference numerals that are introduced in the specification in association with a drawing figure may be repeated in one or more subsequent figures without additional description in the specification in order to provide context for other features, and not every element may be labeled in every figure. The drawing figures are not necessarily to scale, emphasis instead being placed upon illustrating embodiments, principles and concepts. The drawings are not intended to limit the scope of the claims included herewith.
FIG. 1A is a block diagram of a network computing system, in accordance with an illustrative embodiment;
FIG. 1B is a block diagram of a network computing system for delivering a computing environment from a server to a client via an appliance, in accordance with an illustrative embodiment;
FIG. 1C is a block diagram of a computing device, in accordance with an illustrative embodiment;
FIG. 2 is a block diagram of an appliance for processing communications between a client and a server, in accordance with an illustrative embodiment;
FIG. 3 is a block diagram of a virtualization environment, in accordance with an illustrative embodiment;
FIG. 4 is a block diagram of an embodiment of a system for generating configuration templates; and
FIGs. 5A-5B are a flow diagram of an embodiment of a method for generating configuration templates.

The features and advantages of the present solution will become more apparent from the detailed description set forth below when taken in conjunction with the drawings, in which like reference characters identify corresponding elements throughout. In the drawings, like reference numbers generally indicate identical, functionally similar, and/or structurally similar elements

### DETAILED DESCRIPTION

For purposes of reading the description of the various embodiments below, the following descriptions of the sections of the specification and their respective contents may be helpful:
Section A describes a network environment and computing environment which may be useful for practicing embodiments described herein;
Section B describes embodiments of systems and methods for delivering a computing environment to a remote user;
Section C describes embodiments of systems and methods for virtualizing an application delivery controller; and
Section D describes embodiments of systems and methods for generating configuration templates.

### A. Network and Computing Environment

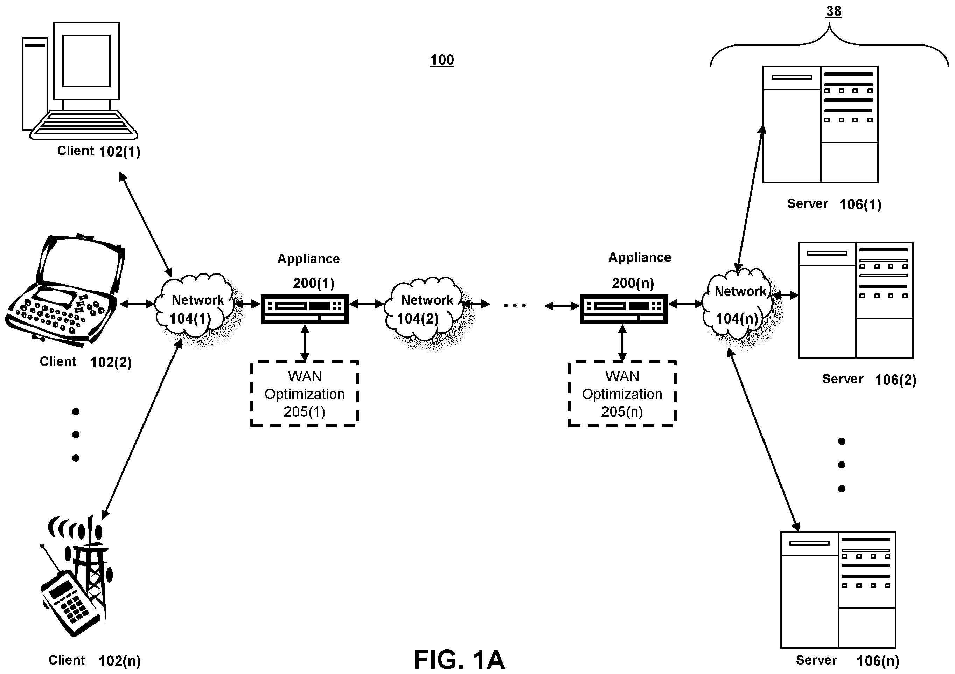

Referring to FIG. 1A, an illustrative network environment 100 is depicted. Network environment 100 may include one or more clients 102(1)-102(n) (also generally referred to as local machine(s) 102 or client(s) 102) in communication with one or more servers 106(1)-106(n) (also generally referred to as remote machine(s) 106 or server(s) 106) via one or more networks 104(1)-104n (generally referred to as network(s) 104). In some embodiments, a client 102 may communicate with a server 106 via one or more appliances 200(1)-200n (generally referred to as appliance(s) 200 or gateway(s) 200).

Although the embodiment shown in FIG. 1A shows one or more networks 104 between clients 102 and servers 106, in other embodiments, clients 102 and servers 106 may be on the same network 104. The various networks 104 may be the same type of network or different types of networks. For example, in some embodiments, network 104(1) may be a private network such as a local area network (LAN) or a company Intranet, while network 104(2) and/or network 104(n) may be a public network, such as a wide area network (WAN) or the Internet. In other embodiments, both network 104(1) and network 104(n) may be private networks. Networks 104 may employ one or more types of physical networks and/or network topologies, such as wired and/or wireless networks, and may employ one or more communication transport protocols, such as transmission control protocol (TCP), internet protocol (IP), user datagram protocol (UDP) or other similar protocols.

As shown in FIG. 1A, one or more appliances 200 may be located at various points or in various communication paths of network environment 100. For example, appliance 200 may be deployed between two networks 104(1) and 104(2), and appliances 200 may communicate with one another to work in conjunction to, for example, accelerate network traffic between clients 102 and servers 106. In other embodiments, the appliance 200 may be located on a network 104. For example, appliance 200 may be implemented as part of one of clients 102 and/or servers 106.

As shown in FIG. 1A, one or more servers 106 may operate as a server farm 38. Servers 106 of server farm 38 may be logically grouped, and may either be geographically co-located (e.g., on premises) or geographically dispersed (e.g., cloud based) from clients 102 and/or other servers 106. In an embodiment, server farm 38 executes one or more applications on behalf of one or more of clients 102 (e.g., as an application server), although other uses are possible, such as a file server, gateway server, proxy server, or other similar server uses. Clients 102 may seek access to hosted applications on servers 106.

As shown in FIG. 1A, in some embodiments, appliances 200 may include, be replaced by, or be in communication with, one or more additional appliances, such as WAN optimization appliances 205(1)-205(n), referred to generally as WAN optimization appliance(s) 205. For example, WAN optimization appliance 205 may accelerate, cache, compress or otherwise optimize or improve performance, operation, flow control, or quality of service of network traffic, such as traffic to and/or from a WAN connection, such as optimizing Wide Area File Services (WAFS), accelerating Server Message Block (SMB) or Common Internet File System (CIFS). In some embodiments, appliance 205 may be a performance enhancing proxy or a WAN optimization controller. In one embodiment, appliance 205 may be implemented as CloudBridge® products sold by Citrix Systems, Inc. of Fort Lauderdale, FL.

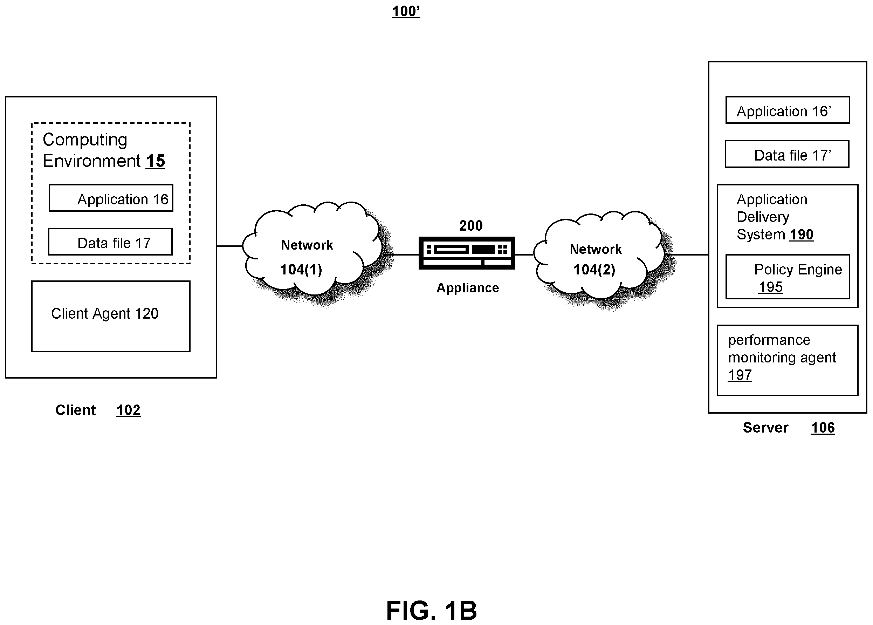

Referring to FIG. 1B, an example network environment 100' for delivering and/or operating a computing network environment on a client 102 is shown. As shown in FIG. 1B, a server 106 may include an application delivery system 190 for delivering a computing environment, application, and/or data files to one or more clients 102. Client 102 may include client agent 120 and computing environment 15. Computing environment 15 may execute or operate an application, 16, that accesses, processes or uses a data file 17. Computing environment 15, application 16 and/or data file 17 may be delivered to the client 102 via appliance 200 and/or the server 106.

Appliance 200 may accelerate delivery of all or a portion of computing environment 15 to a client 102, for example by the application delivery system 190. For example, appliance 200 may accelerate delivery of a streaming application and data file processable by the application from a data center to a remote user location by accelerating transport layer traffic between a client 102 and a server 106. Such acceleration may be provided by one or more techniques, such as: 1) transport layer connection pooling, 2) transport layer connection multiplexing, 3) transport control protocol buffering, 4) compression, 5) caching, or other techniques. Appliance 200 may also provide load balancing of servers 106 to process requests from clients 102, act as a proxy or access server to provide access to the one or more servers 106, provide security and/or act as a firewall between a client 102 and a server 106, provide Domain Name Service (DNS) resolution, provide one or more virtual servers or virtual internet protocol servers, and/or provide a secure virtual private network (VPN) connection from a client 102 to a server 106, such as a secure socket layer (SSL) VPN connection and/or provide encryption and decryption operations.

Application delivery management system 190 may deliver computing environment 15 to a user (e.g., client 102), remote or otherwise, based on authentication and authorization policies applied by policy engine 195. A remote user may obtain a computing environment and access to server stored applications and data files from any network-connected device (e.g., client 102). For example, appliance 200 may request an application and data file from server 106. In response to the request, application delivery system 190 and/or server 106 may deliver the application and data file to client 102, for example via an application stream to operate in computing environment 15 on client 102, or via a remote-display protocol or otherwise via remote-based or server-based computing. In an embodiment, application delivery system 190 may be implemented as any portion of the Citrix Workspace Suite™ by Citrix Systems, Inc., such as XenApp® or XenDesktop®.

Policy engine 195 may control and manage the access to, and execution and delivery of, applications. For example, policy engine 195 may determine the one or more applications a user or client 102 may access and/or how the application should be delivered to the user or client 102, such as a server-based computing, streaming or delivering the application locally to the client 50 for local execution.

For example, in operation, a client 102 may request execution of an application (e.g., application 16') and application delivery system 190 of server 106 determines how to execute application 16', for example based upon credentials received from client 102 and a user policy applied by policy engine 195 associated with the credentials. For example, application delivery system 190 may enable client 102 to receive application-output data generated by execution of the application on a server 106, may enable client 102 to execute the application locally after receiving the application from server 106, or may stream the application via network 104 to client 102. For example, in some embodiments, the application may be a server-based or a remote-based application executed on server 106 on behalf of client 102. Server 106 may display output to client 102 using a thin-client or remote-display protocol, such as the Independent Computing Architecture (ICA) protocol by Citrix Systems, Inc. of Fort Lauderdale, FL. The application may be any application related to real-time data communications, such as applications for streaming graphics, streaming video and/or audio or other data, delivery of remote desktops or workspaces or hosted services or applications, for example infrastructure as a service (IaaS), workspace as a service (WaaS), software as a service (SaaS) or platform as a service (PaaS).

One or more of servers 106 may include a performance monitoring service or agent 197. In some embodiments, a dedicated one or more servers 106 may be employed to perform performance monitoring. Performance monitoring may be performed using data collection, aggregation, analysis, management and reporting, for example by software, hardware or a combination thereof. Performance monitoring may include one or more agents for performing monitoring, measurement and data collection activities on clients 102 (e.g., client agent 120), servers 106 (e.g., agent 197) or an appliances 200 and/or 205 (agent not shown). In general, monitoring agents (e.g., 120 and/or 197) execute transparently (e.g., in the background) to any application and/or user of the device. In some embodiments, monitoring agent 197 includes any of the product embodiments referred to as EdgeSight by Citrix Systems, Inc. of Fort Lauderdale, FL.

The monitoring agents 120 and 197 may monitor, measure, collect, and/or analyze data on a predetermined frequency, based upon an occurrence of given event(s), or in real time during operation of network environment 100. The monitoring agents may monitor resource consumption and/or performance of hardware, software, and/or communications resources of clients 102, networks 104, appliances 200 and/or 205, and/or servers 106. For example, network connections such as a transport layer connection, network latency, bandwidth utilization, end-user response times, application usage and performance, session connections to an application, cache usage, memory usage, processor usage, storage usage, database transactions, client and/or server utilization, active users, duration of user activity, application crashes, errors, or hangs, the time required to log-in to an application, a server, or the application delivery system, and/or other performance conditions and metrics may be monitored.

The monitoring agents 120 and 197 may provide application performance management for application delivery system 190. For example, based upon one or more monitored performance conditions or metrics, application delivery system 190 may be dynamically adjusted, for example periodically or in real-time, to optimize application delivery by servers 106 to clients 102 based upon network environment performance and conditions.

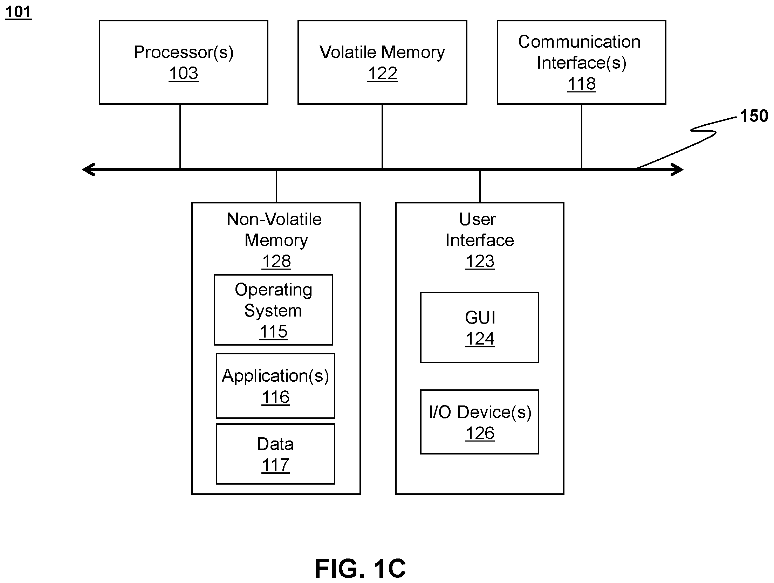

In described embodiments, clients 102, servers 106, and appliances 200 and 205 may be deployed as and/or executed on any type and form of computing device, such as any desktop computer, laptop computer, or mobile device capable of communication over at least one network and performing the operations described herein. For example, clients 102, servers 106 and/or appliances 200 and 205 may each correspond to one computer, a plurality of computers, or a network of distributed computers such as computer 101 shown in FIG. 1C.

As shown in FIG. 1C, computer 101 may include one or more processors 103, volatile memory 122 (e.g., RAM), non-volatile memory 128 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 123, one or more communications interfaces 118, and communication bus 150. User interface 123 may include graphical user interface (GUI) 124 (e.g., a touchscreen, a display, etc.) and one or more input/output (I/O) devices 126 (e.g., a mouse, a keyboard, etc.). Non-volatile memory 128 stores operating system 115, one or more applications 116, and data 117 such that, for example, computer instructions of operating system 115 and/or applications 116 are executed by processor(s) 103 out of volatile memory 122. Data may be entered using an input device of GUI 124 or received from I/O device(s) 126. Various elements of computer 101 may communicate via communication bus 150. Computer 101 as shown in FIG. 1C is shown merely as an example, as clients 102, servers 106 and/or appliances 200 and 205 may be implemented by any computing or processing environment and with any type of machine or set of machines that may have suitable hardware and/or software capable of operating as described herein.

Processor(s) 103 may be implemented by one or more programmable processors executing one or more computer programs to perform the functions of the system. As used herein, the term "processor" describes an electronic circuit that performs a function, an operation, or a sequence of operations. The function, operation, or sequence of operations may be hard coded into the electronic circuit or soft coded by way of instructions held in a memory device. A "processor" may perform the function, operation, or sequence of operations using digital values or using analog signals. In some embodiments, the "processor" can be embodied in one or more application specific integrated circuits (ASICs), microprocessors, digital signal processors, microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors.

Communications interfaces 118 may include one or more interfaces to enable computer 101 to access a computer network such as a LAN, a WAN, or the Internet through a variety of wired and/or wireless or cellular connections.

In described embodiments, a first computing device 101 may execute an application on behalf of a user of a client computing device (e.g., a client 102), may execute a virtual machine, which provides an execution session within which applications execute on behalf of a user or a client computing device (e.g., a client 102), such as a hosted desktop session, may execute a terminal services session to provide a hosted desktop environment, or may provide access to a computing environment including one or more of: one or more applications, one or more desktop applications, and one or more desktop sessions in which one or more applications may execute.

### B. Appliance Architecture

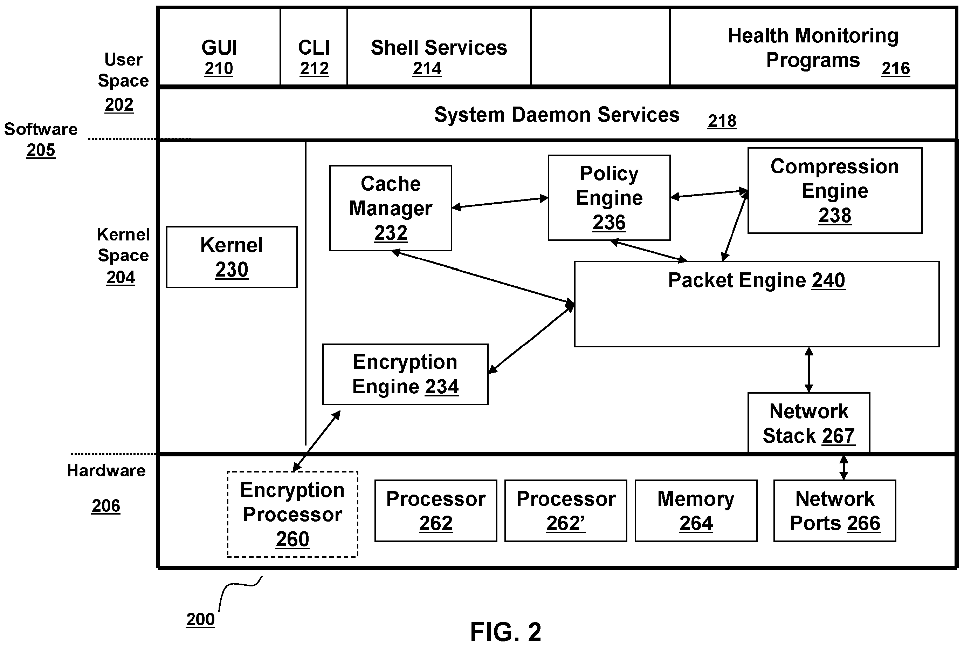

FIG. 2 shows an example embodiment of appliance 200. As described herein, appliance 200 may be implemented as a server, gateway, router, switch, bridge or other type of computing or network device. As shown in FIG. 2, an embodiment of appliance 200 may include a hardware layer 206 and a software layer 205 divided into a user space 202 and a kernel space 204. Hardware layer 206 provides the hardware elements upon which programs and services within kernel space 204 and user space 202 are executed and allow programs and services within kernel space 204 and user space 202 to communicate data both internally and externally with respect to appliance 200. As shown in FIG. 2, hardware layer 206 may include one or more processing units 262 for executing software programs and services, memory 264 for storing software and data, network ports 266 for transmitting and receiving data over a network, and encryption processor 260 for encrypting and decrypting data such as in relation to Secure Socket Layer (SSL) or Transport Layer Security (TLS) processing of data transmitted and received over the network.

An operating system of appliance 200 allocates, manages, or otherwise segregates the available system memory into kernel space 204 and user space 202. Kernel space 204 is reserved for running kernel 230, including any device drivers, kernel extensions or other kernel related software. As known to those skilled in the art, kernel 230 is the core of the operating system, and provides access, control, and management of resources and hardware-related elements of application. Kernel space 204 may also include a number of network services or processes working in conjunction with cache manager 232.

Appliance 200 may include one or more network stacks 267, such as a TCP/IP based stack, for communicating with client(s) 102, server(s) 106, network(s) 104, and/or other appliances 200 or 205. For example, appliance 200 may establish and/or terminate one or more transport layer connections between clients 102 and servers 106. Each network stack 267 may include a buffer for queuing one or more network packets for transmission by appliance 200.

Kernel space 204 may include cache manager 232, packet engine 240, encryption engine 234, policy engine 236 and compression engine 238. In other words, one or more of processes 232, 240, 234, 236 and 238 run in the core address space of the operating system of appliance 200, which may reduce the number of data transactions to and from the memory and/or context switches between kernel mode and user mode, for example since data obtained in kernel mode may not need to be passed or copied to a user process, thread or user level data structure.

Cache manager 232 may duplicate original data stored elsewhere or data previously computed, generated or transmitted to reduce the access time of the data. In some embodiments, the cache manager 232 may be a data object in memory 264 of appliance 200, or may be a physical memory having a faster access time than memory 264.

Policy engine 236 may include a statistical engine or other configuration mechanism to allow a user to identify, specify, define or configure a caching policy and access, control and management of objects, data or content being cached by appliance 200, and define or configure security, network traffic, network access, compression or other functions performed by appliance 200.

Encryption engine 234 may process any security related protocol, such as SSL or TLS. For example, encryption engine 234 may encrypt and decrypt network packets, or any portion thereof, communicated via appliance 200, may setup or establish SSL, TLS or other secure connections, for example between client 102, server 106, and/or other appliances 200 or 205. In some embodiments, encryption engine 234 may use a tunneling protocol to provide a VPN between a client 102 and a server 106. In some embodiments, encryption engine 234 is in communication with encryption processor 260. Compression engine 238 compresses network packets bi-directionally between clients 102 and servers 106 and/or between one or more appliances 200.

Packet engine 240 may manage kernel-level processing of packets received and transmitted by appliance 200 via network stacks 267 to send and receive network packets via network ports 266. Packet engine 240 may operate in conjunction with encryption engine 234, cache manager 232, policy engine 236 and compression engine 238, for example to perform encryption/decryption, traffic management such as request-level content switching and request-level cache redirection, and compression and decompression of data.

User space 202 is a memory area or portion of the operating system used by user mode applications or programs otherwise running in user mode. A user mode application may not access kernel space 204 directly and uses service calls in order to access kernel services. User space 202 may include graphical user interface (GUI) 210, a command line interface (CLI) 212, shell services 214, health monitor 216, and daemon services 218. GUI 210 and CLI 212 enable a system administrator or other user to interact with and control the operation of appliance 200, such as via the operating system of appliance 200. Shell services 214 include programs, services, tasks, processes or executable instructions to support interaction with appliance 200 by a user via the GUI 210 and/or CLI 212.

Health monitor 216 monitors, checks, reports and ensures that network systems are functioning properly and that users are receiving requested content over a network, for example by monitoring activity of appliance 200. In some embodiments, health monitor 216 intercepts and inspects any network traffic passed via appliance 200. For example, health monitor 216 may interface with one or more of encryption engine 234, cache manager 232, policy engine 236, compression engine 238, packet engine 240, daemon services 218, and shell services 214 to determine a state, status, operating condition, or health of any portion of the appliance 200. Further, health monitor 216 may determine whether a program, process, service or task is active and currently running, check status, error or history logs provided by any program, process, service or task to determine any condition, status or error with any portion of appliance 200. Additionally, health monitor 216 may measure and monitor the performance of any application, program, process, service, task or thread executing on appliance 200.

Daemon services 218 are programs that run continuously or in the background and handle periodic service requests received by appliance 200. In some embodiments, a daemon service may forward the requests to other programs or processes, such as another daemon service 218 as appropriate.

As described herein, appliance 200 may relieve servers 106 of much of the processing load caused by repeatedly opening and closing transport layers connections to clients 102 by opening one or more transport layer connections with each server 106 and maintaining these connections to allow repeated data accesses by clients via the Internet (e.g., "connection pooling"). To perform connection pooling, appliance 200 may translate or multiplex communications by modifying sequence numbers and acknowledgment numbers at the transport layer protocol level (e.g., "connection multiplexing"). Appliance 200 may also provide switching or load balancing for communications between the client 102 and server 106.

As described herein, each client 102 may include client agent 120 for establishing and exchanging communications with appliance 200 and/or server 106 via a network 104. Client 102 may have installed and/or execute one or more applications that are in communication with network 104. Client agent 120 may intercept network communications from a network stack used by the one or more applications. For example, client agent 120 may intercept a network communication at any point in a network stack and redirect the network communication to a destination desired, managed or controlled by client agent 120, for example to intercept and redirect a transport layer connection to an IP address and port controlled or managed by client agent 120. Thus, client agent 120 may transparently intercept any protocol layer below the transport layer, such as the network layer, and any protocol layer above the transport layer, such as the session, presentation or application layers. Client agent 120 can interface with the transport layer to secure, optimize, accelerate, route or load-balance any communications provided via any protocol carried by the transport layer.

In some embodiments, client agent 120 is implemented as an Independent Computing Architecture (ICA) client developed by Citrix Systems, Inc. of Fort Lauderdale, FL. Client agent 120 may perform acceleration, streaming, monitoring, and/or other operations. For example, client agent 120 may accelerate streaming an application from a server 106 to a client 102. Client agent 120 may also perform end-point detection/scanning and collect end-point information about client 102 for appliance 200 and/or server 106. Appliance 200 and/or server 106 may use the collected information to determine and provide access, authentication and authorization control of the client's connection to network 104. For example, client agent 120 may identify and determine one or more client-side attributes, such as: the operating system and/or a version of an operating system, a service pack of the operating system, a running service, a running process, a file, presence or versions of various applications of the client, such as antivirus, firewall, security, and/or other software.

### C. Systems and Methods for Providing Virtualized Application Delivery Controller

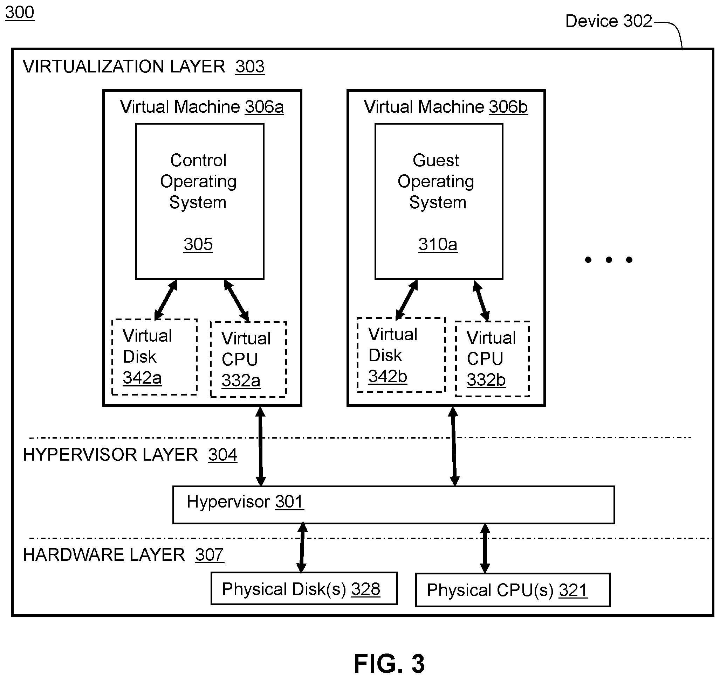

Referring now to FIG. 3, a block diagram of a virtualized environment 300 is shown. As shown, a computing device 302 in virtualized environment 300 includes a virtualization layer 303, a hypervisor layer 304, and a hardware layer 307. Hypervisor layer 304 includes one or more hypervisors (or virtualization managers) 301 that allocates and manages access to a number of physical resources in hardware layer 307 (e.g., physical processor(s) 321 and physical disk(s) 328) by at least one virtual machine (VM) (e.g., one of VMs 306) executing in virtualization layer 303. Each VM 306 may include allocated virtual resources such as virtual processors 332 and/or virtual disks 342, as well as virtual resources such as virtual memory and virtual network interfaces. In some embodiments, at least one of VMs 306 may include a control operating system (e.g., 305) in communication with hypervisor 301 and used to execute applications for managing and configuring other VMs (e.g., guest operating systems 310) on device 302.

In general, hypervisor(s) 301 may provide virtual resources to an operating system of VMs 306 in any manner that simulates the operating system having access to a physical device. Thus, hypervisor(s) 301 may be used to emulate virtual hardware, partition physical hardware, virtualize physical hardware, and execute virtual machines that provide access to computing environments. In an illustrative embodiment, hypervisor(s) 301 may be implemented as a XEN hypervisor, for example as provided by the open source Xen.org community. In an illustrative embodiment, device 302 executing a hypervisor that creates a virtual machine platform on which guest operating systems may execute is referred to as a host server. In such an embodiment, device 302 may be implemented as a XEN server as provided by Citrix Systems, Inc., of Fort Lauderdale, FL.

Hypervisor 301 may create one or more VMs 306 in which an operating system (e.g., control operating system 305 and/or guest operating system 310) executes. For example, the hypervisor 301 loads a virtual machine image to create VMs 306 to execute an operating system. Hypervisor 301 may present VMs 306 with an abstraction of hardware layer 307, and/or may control how physical capabilities of hardware layer 307 are presented to VMs 306. For example, hypervisor(s) 301 may manage a pool of resources distributed across multiple physical computing devices.

In some embodiments, one of VMs 306 (e.g., the VM executing control operating system 305) may manage and configure other of VMs 306, for example by managing the execution and/or termination of a VM and/or managing allocation of virtual resources to a VM. In various embodiments, VMs may communicate with hypervisor(s) 301 and/or other VMs via, for example, one or more Application Programming Interfaces (APIs), shared memory, and/or other techniques.

In general, VMs 306 may provide a user of device 302 with access to resources within virtualized computing environment 300, for example, one or more programs, applications, documents, files, desktop and/or computing environments, or other resources. In some embodiments, VMs 306 may be implemented as fully virtualized VMs that are not aware that they are virtual machines (e.g., a Hardware Virtual Machine or HVM). In other embodiments, the VM may be aware that it is a virtual machine, and/or the VM may be implemented as a paravirtualized (PV) VM.

Although shown in FIG. 3 as including a single virtualized device 302, virtualized environment 300 may include a plurality of networked devices in a system in which at least one physical host executes a virtual machine. A device on which a VM executes may be referred to as a physical host and/or a host machine. For example, appliance 200 may be additionally or alternatively implemented in a virtualized environment 300 on any computing device, such as a client 102, server 106 or appliance 200. Virtual appliances may provide functionality for availability, performance, health monitoring, caching and compression, connection multiplexing and pooling and/or security processing (e.g., firewall, VPN, encryption/decryption, etc.), similarly as described in regard to appliance 200.

In some embodiments, a server may execute multiple virtual machines 306, for example on various cores of a multi-core processing system and/or various processors of a multiple processor device. For example, although generally shown herein as "processors" (e.g., in FIGs. 1C, 2 and 3), one or more of the processors may be implemented as either single- or multi-core processors to provide a multi-threaded, parallel architecture and/or multi-core architecture. Each processor and/or core may have or use memory that is allocated or assigned for private or local use that is only accessible by that processor/core, and/or may have or use memory that is public or shared and accessible by multiple processors/cores. Such architectures may allow work, task, load or network traffic distribution across one or more processors and/or one or more cores (e.g., by functional parallelism, data parallelism, flow-based data parallelism, etc.).

Further, instead of (or in addition to) the functionality of the cores being implemented in the form of a physical processor/core, such functionality may be implemented in a virtualized environment (e.g., 300) on a client 102, server 106 or appliance 200, such that the functionality may be implemented across multiple devices, such as a cluster of computing devices, a server farm or network of computing devices, etc. The various processors/cores may interface or communicate with each other using a variety of interface techniques, such as core to core messaging, shared memory, kernel APIs, etc.

In embodiments employing multiple processors and/or multiple processor cores, described embodiments may distribute data packets among cores or processors, for example to balance the flows across the cores. For example, packet distribution may be based upon determinations of functions performed by each core, source and destination addresses, and/or whether: a load on the associated core is above a predetermined threshold; the load on the associated core is below a predetermined threshold; the load on the associated core is less than the load on the other cores; or any other metric that can be used to determine where to forward data packets based in part on the amount of load on a processor.

For example, data packets may be distributed among cores or processes using receive-side scaling (RSS) in order to process packets using multiple processors/cores in a network. RSS generally allows packet processing to be balanced across multiple processors/cores while maintaining in-order delivery of the packets. In some embodiments, RSS may use a hashing scheme to determine a core or processor for processing a packet.

The RSS may generate hashes from any type and form of input, such as a sequence of values. This sequence of values can include any portion of the network packet, such as any header, field or payload of network packet, and include any tuples of information associated with a network packet or data flow, such as addresses and ports. The hash result or any portion thereof may be used to identify a processor, core, engine, etc., for distributing a network packet, for example via a hash table, indirection table, or other mapping technique.

Although shown in FIGs. 1A and 1B as being single appliances, appliances 200 may be implemented as one or more distributed or clustered appliances. Individual computing devices or appliances may be referred to as nodes of the cluster. A centralized management system may perform load balancing, distribution, configuration, or other tasks to allow the nodes to operate in conjunction as a single computing system. Such a cluster may be viewed as a single virtual appliance or computing device. A plurality of appliances 200 or other computing devices (e.g., nodes) may be joined into a single cluster. A cluster may operate as an application server, network storage server, backup service, or any other type of computing device to perform many of the functions of appliances 200 and/or 205.

### D. Systems and Methods for Generating Configuration Templates

The present disclosure is directed towards systems and methods for generating configuration templates. Configuration templates can be generated or built by identifying patterns from one or more previous, existing or current configuration examples or instances. For example, a device intermediary to a plurality of clients, a plurality of servers and one or more application delivery controllers (ADC) can identify previous, existing or current configuration example instances of one or more application deliver controllers. The configuration template can be used to integrate existing configuration instances, for example, by modifying one or more parameter values of the existing configuration instances.

In embodiments, a configuration for application delivery controllers can be unique to a particular client using the application delivery controller or system providing the application delivery controller. Thus, clients or systems that interact with one or more application delivery controllers can have existing configurations that are different and include different objects, parameters and instructions. For example, the clients and systems may have created the configurations manually thus, forming configurations that are different. The clients and systems may have created the configurations using different configuration tools or software, resulting in configurations that are different. Thus, integrating and centrally managing the different configurations can be difficult, for example, when performing updates or modifications to each of the configurations. For example, it can be difficult to manage the different existing configurations when transitioning workloads to different public and/or private clouds and difficult to migrate the existing configurations to new configuration instances. The existing configuration can be lengthy, complex, and/or intertwined with multiple configurations. Thus, untangling the existing configurations from an existing configuration instance and manually migrating them to generate a new configuration instance can be difficult.

The systems and methods described herein generate a configuration template that can be used to integrate existing configurations generated using different methods and/or different configuration tools. For example, clients can convert existing configuration instances into one or more configuration templates using an automated process. The configuration template can be used to centrally manage a plurality of existing configurations and generate new configuration instances without having to rewrite parameters or instructions and instead can use the configuration template and then modify one or more parameter values of the configuration template to generate a new configuration instance for an application delivery controller. In embodiments, the configuration templates can be used to create or author configuration patterns, store configuration patterns, and/or use the configuration patterns to generate new configuration instances. The configuration templates can be used to centrally manage existing configurations and generate a graphical user interface (GUI) for creating new configurations. The configuration templates can provide the ability to move configurations to configuration instances in different public and/or private clouds, and/or provide updates to existing configuration instances.

The configuration templates can be used to re-generate a previous, existing or current configuration and generate similar variations of the same or similar configuration (e.g., configurations that use the same configuration pattern). The systems and methods can used in variety of different scenarios where patterns of configurations can be identified and codified into a system or template. The systems and methods described herein can be used in variety of different scenarios where existing configurations can be matched to patterns, and regenerated using configuration templates associated with these patterns.

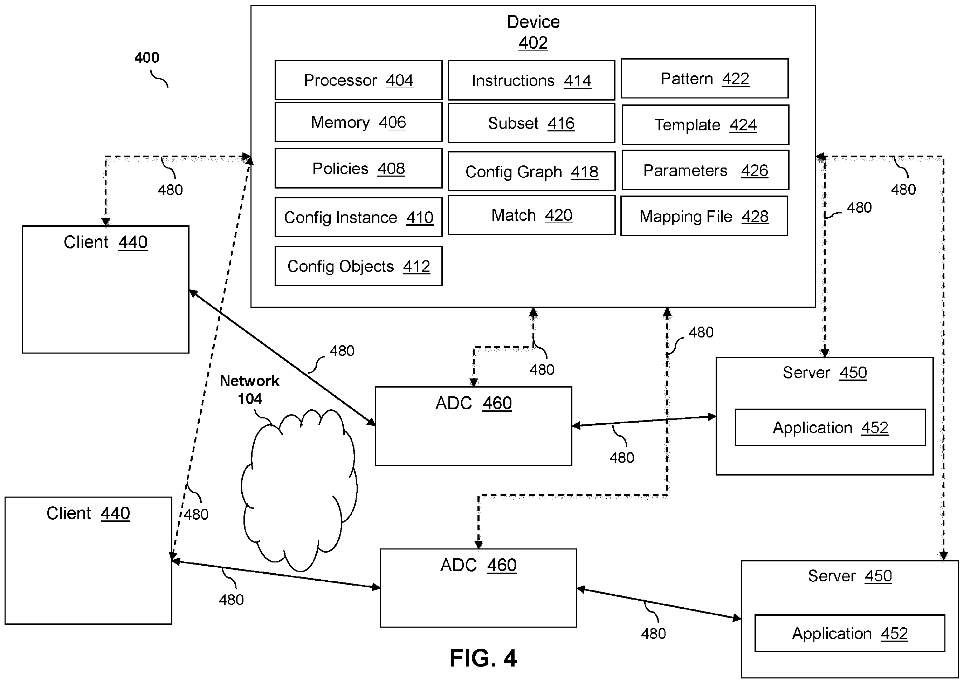

Referring now to FIG. 4, depicted is a system 400 for generating configuration templates 424. A device 402 can include an intermediary device, intermediary to one or more application delivery controllers (ADCs) 460, a plurality of servers 450, and/or a plurality of client devices (e.g., clients 102 of FIGs. 1A-1B, computer 101 of FIG. 1C). For example, the device 402 can include a proxy or a gateway to monitor network traffic between the plurality of clients and plurality of servers. In embodiments, the device 402 can include a server. The device 402 can include one or more processors 404 coupled to a memory 406. The processor 404 can include or be coupled to a non-volatile memory 406 that stores computer instructions and an operating system. For example, the computer instructions can be executed by the processor 404 out of volatile memory 406 to perform all or part of the method 500. The device 402 can include or execute policies 408 or rules to identify configuration instances 410 and/or configuration objects 412. The device 402 can include or execute policies 408 or rules to remove instance specific instructions 414 from one or more set of instructions 414 for one or more application delivery controller 460. In embodiments, the policies 408 can include rules for generating one or more configuration graphs 418. The policies 408 can include rules for identifying a match 420 of at least a portion of a configuration graph 418 and a configuration pattern 422. The policies 408 can include rules for generating a configuration template 424 having a set of parameters 426 to configure at least one application delivery controller to generate instructions 414 for managing network traffic for one or more applications 452 identified in a subset of configuration objects 416.

The device 402 can be implemented using hardware or a combination of software and hardware. For example, each component of the device 402 can include logical circuity (e.g., a central processing unit or CPU) that responses to and processes instructions fetched from a memory unit (e.g., memory 406). Each component of the device 402 can include or use a microprocessor or a multi-core processor. A multi-core processor can include two or more processing units on a single computing component. Each component of the device 402 can be based on any of these processors, or any other processor capable of operating as described herein. Each processor can utilize instruction level parallelism, thread level parallelism, different levels of cache, etc. For example, the device 402 can include at least one logic device such as a computing device or server having at least one processor to communicate via a network 104. The components and elements of the device 402 can be separate components or a single component. For example, the device 402 can include combinations of hardware and software, such as one or more processors. The device 402 can include a structured set of data. For example, the device 402 can include and/or store data corresponding to one or more configuration templates 424. The device 402 can include a memory component (e.g., memory 406) to store and retrieve data. The memory 406 can include a random access memory (RAM) or other dynamic storage device, coupled with the device 402 for storing information, and instructions to be executed by the device 402. The memory 406 can include at least one read only memory (ROM) or other static storage device coupled with the device 402 for storing static information and instructions. The memory406 can include a storage device, such as a solid state device, magnetic disk or optical disk, coupled with the device 402 to persistently store information and instructions.

The device 402 can store and maintain a plurality of configuration data, for example, configuration data for one or more application delivery controllers 460. In embodiments, the device 402 can store and maintain one or more configuration instances 410, one or more configuration objects 412, one or more sets of instructions 414, one or more subsets of configuration objects 416, one or more configuration graphs 418, one or more matches 420, one or more configuration patterns 422, one or more configuration templates 424, one or more parameters 426, and one or more mapping files 428. A configuration instance 410 can include or correspond to a previous, existing or current configuration for at least one application delivery controller 460. The configuration instance 410 can include a previous, existing or current ADC configuration for an application 452. The configuration instance 410 can include a plurality of configuration objects 412. A configuration object 412 can include or correspond to a portion of a configuration, a set of instructions 414, a set of arguments or code. In embodiments, a configuration object 412 can include a set of instructions 414, a set of arguments or code to form a portion of a configuration. In embodiments, a configuration object 412 can include a type of object.

Instructions 414 can include arguments to define a set parameters for a configuration object 412. The instructions 414 can include command lines, functions or protocols used to generate, build or design a configuration object 412. In embodiments, the instructions 414 can include instructions 414 for managing network traffic between one or more clients 440 ad one or more servers 450 providing one or more applications 452. In some embodiments, the instructions 414 can include network settings for a server 450 and/or application 452, such as but not limited to, IP addresses, port numbers, cluster data, and/or identifiers. Subsets of configuration objects 416 can include a portion or group of configuration objects 416. The subsets of configuration objects 416 can include a single configuration object 416. The subsets of configuration objects 416 can include two or more configuration objects 416. Configuration graphs 418 can include a graph of an application 452 configuration. In embodiments, a configuration graph 418 can include associations or relationships between different configuration objects 412 or configuration entities of an application 452 identified in the subset of configuration objects 416. The configuration graph 418 can include a graph illustrating a relation between one or more servers 450, one or more services, one or more configuration objects 412, and/or one or more applications 452.

Matches 420 can include or correspond to a portion of a configuration graph 418 that is the same as, similar to or related to at least one configuration pattern 422. In embodiments, a match 420 can include a matching pattern between a portion of a configuration graph 418 that is the same as, similar to or related to at least one configuration pattern 422. The match 420 can include one or more common configuration objects 412, instructions 414 and/or parameters 426. In embodiments, a portion of a configuration graph 418 can match 420 a configuration pattern 422 or a pattern of a configuration pattern 422 if the graph 418 and the pattern 422 or the portion of the pattern 422 share or include one or more common configuration objects 412, instructions 414 and/or parameters 426. A configuration pattern 422 can include or correspond to a generic form of a configuration or commonly used configuration parameters. A configuration pattern 422 can include or correspond to a building block or base set of configuration parameters for a device, server 450, application delivery controller 460 and/or application 452. A configuration pattern 422 can include configuration object 412 used in two or more configuration instances 410. A configuration pattern 422 can include configuration parameters 426 used in two or more existing configurations (e.g., ADC configurations) and/or two or more previously used configurations. In some embodiments, a configuration pattern 422 for an ADC configuration can include one or more configuration objects 412.

A configuration templates 424 can include or refer a base configuration instance 410, a generic configuration parameters 426, and/or generic configuration objects 412. In embodiments, the configuration template 424 can include configuration objects 412, instructions 414 and/or parameters 426 that are used in or common to multiple configurations of, for example, application delivery controller configurations. The configuration template 424 can include a configuration pattern 422 used in or common to multiple configurations. The configuration template 424 be used to generate one or more versions or variants of configuration by varying one or more parameter 426 values of the respective configuration template 424. The parameters 426 can include values or instructions forming a configuration template 424. The parameters 426 can include values or identifiers of one or more instructions 414 of a configuration object 412 and/or values or identifiers of a configuration object 412. The parameters 426 can include a name, type, and/ or value for a configuration object 412. A mapping file 428 can include or correspond to a mapping or association between one or more instructions 414 of at least one configuration pattern 422 and one or more parameters 426 of a configuration template 424. The mapping file 428 can include an association between a portion of a configuration graph 418 and a configuration pattern 422. In embodiments, the mapping file 428 can include an association between configuration arguments and one or more parameters 426 of a configuration template 424.

The clients 440 can include a client device, such as, but not limited to a computing device or a mobile device. For example, the requestors 640 can be the same as or substantially similar to clients 102(1)-102(n) of FIG. 1A and/or client 102 of FIG. 1B, computer 101 of FIG. 1C. Thus, the clients 440 can include or correspond to an instance of any client device, mobile device or computer device described herein. The clients 440 can include, but not limited to, a browser (e.g., web browser), client application, a desktop device, a mobile device, and/or an Internet of Things (IoT) device. The clients 440 can communicate via the device 602 and/or an application delivery controller 460 through network 104 to access one or more applications 452 provided by one or more servers 450 and/or access one or more servers 450. In some embodiments, the clients 440 can connect with device 402, an application delivery controller 460, and/or one or more servers 450 via one or more channels 480. The channels 480 can include a session or connection between the client 440 and the device 402, an application delivery controller 460, and/or one or more servers 450. The channel 480 may include encrypted and/or secure sessions established between the client 440 and the device 402, an application delivery controller 460, and/or one or more servers 450. The encrypted session can include an encrypted connection between the client 440 and the device 402, an application delivery controller 460, and/or one or more servers 450.

Application delivery controller 460 can include a device or server to provide application services for applications 452 accessed by one or more clients 440. In some embodiments, an application delivery controller 460 can include a computer network device in a datacenter, a private cloud or a private cloud to manage network traffic for the datacenter, a private cloud or a private cloud. The application delivery controller 460 can monitor, manage and/or control communications between a plurality of clients 440 and a plurality of servers 450 providing a plurality of applications 452. The application delivery controller 460 can perform load balancing, health monitoring, and/or application acceleration between the plurality of clients 440 and the plurality of servers 450, and/or between the plurality of servers 450. The application delivery controller 460 can be disposed within network 104 between the plurality of clients 440 and the plurality of servers 450.

Servers 450 can correspond to network devices to manage network traffic within network 104. The servers 450 can include application servers. In embodiments, server 450 can include but not limited to, a load balancing server, a service, a service group and/or a monitor. In some embodiments, servers 450 can correspond to a remote or third party server. The servers 450 can include, provide or host at least one application 452. The servers 450 can be implemented using hardware or a combination of software and hardware. For example, each component of the servers 450 can include logical circuity (e.g., a central processing unit or CPU) that responses to and processes instructions fetched from a memory unit. Each component of the servers 450 can include or use a microprocessor or a multi-core processor. A multi-core processor can include two or more processing units on a single computing component. Each component of the servers 450 can be based on any of these processors, or any other processor capable of operating as described herein. Each processor can utilize instruction level parallelism, thread level parallelism, different levels of cache, etc. For example, the servers 450 can include at least one logic device such as a computing device or server having at least one processor to communicate via a network 104.

Network 104 may be a public network, such as a wide area network (WAN) or the Internet. In some embodiments, network 104 may be a private network such as a local area network (LAN) or a company Intranet. Network 104 may be the same as or substantially similar to network 104 described above with respect to FIGs. 1A-1B, 4, and 5A-5B.

Each of the above-mentioned elements or entities is implemented in hardware, or a combination of hardware and software, in one or more embodiments. Each component of the device 402 may be implemented using hardware or a combination of hardware or software detailed above in connection with FIGs. 1-3. For instance, each of these elements or entities can include any application, program, library, script, task, service, process or any type and form of executable instructions executing on hardware of a client device (e.g., device 402). The hardware includes circuitry such as one or more processors in one or more embodiments.

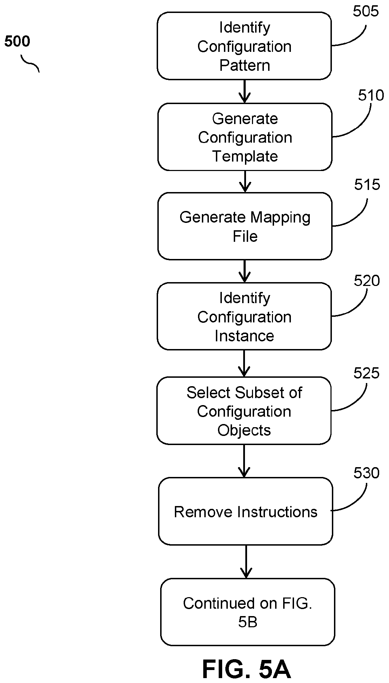

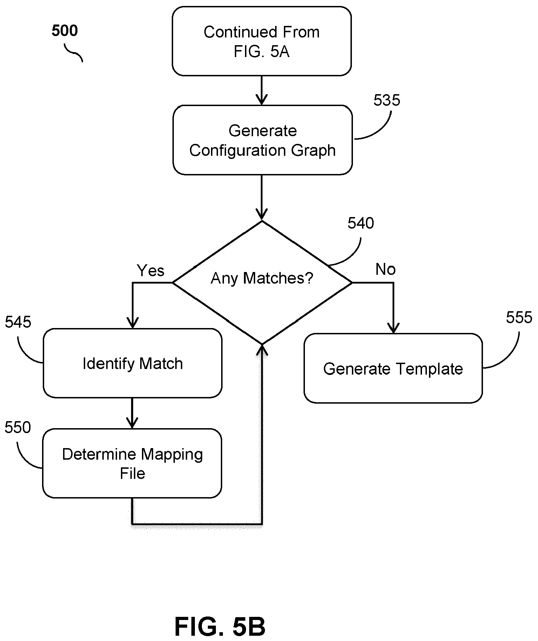

Referring now to FIGs. 5A-5B, depicted is a flow diagram for a method 500 of generating configuration templates. The functionalities of method 500 may be implemented using, or performed by, the components detailed herein in connection with FIGs. 1-4. For example, any of the operations of method 500 may be performed by any one or more of the components or devices described herein, for example, the device 402 or processor 404.

Referring now to operation (505), and in some embodiments, a configuration pattern 422 can be identified. In embodiments, a device 402 can be disposed intermediary (e.g., intermediary device, proxy) between one or more clients 440, one or more servers 450, and/or one or more application delivery controllers (ADC) 460. The one or more application delivery controllers 460 can be disposed intermediary (e.g., intermediary device, proxy) between one or more clients 440 and one or more servers 450. The application delivery controllers 460 can provide load balancing, health monitoring, and/or application acceleration for one or more clients 440 accessing one or more applications 452.

The device 402 can identify one or more configurations patterns 422. A configuration pattern 422 can include or correspond to a generic form of a configuration or commonly used configuration parameters. A configuration pattern 422 can include or correspond to a building block or base set of configuration parameters for a device, server, application delivery controller and/or application. A configuration pattern 422 can include configuration parameters 426 used in two or more existing configurations (e.g., ADC configurations) and/or two or more previously used configurations. In some embodiments, a configuration pattern 422 for an ADC configuration can include one or more configuration objects 412. For example, in embodiments, a configuration pattern 422 can include configuration objects 412 used in two or more configurations (e.g., two or more configuration instances 410) of two or more applications 452 and/or application delivery controllers 460. In embodiments, a configuration pattern 422 can include instructions 414 for configuration objects 412 used in two or more configurations (e.g., two or more configuration instances 410). The device 402 can identify instructions, parameters and/or traits common to configuration objects 412 for multiple configurations (e.g., multiple configuration instances 410).

The device 402 can identify configuration patterns 422 based in part on types of configurations. The configuration patterns 422 can include a generic form of a configuration and can include common configuration object types. For example, configuration object types can include, but not limited to, a load balancing server, a service group, a set of service group members, and/or one or more monitors. In one embodiments, the device 402 can identify a load balancing configuration patterns 422 including one or more combinations of a load balancing server, a service group, one or more servers, a set of service group members, and one or more monitors. For example, a first load balancing configuration pattern 422 can include a load balancing server, one or more servers, individual services, and one or more monitors. A second load balancing configuration pattern 422 can include a load balancing server, a service group, a server, one or more members and one or more monitors. A third load balancing configuration pattern 422 can include a load balancing server, a secure sockets layer (SSL) configuration, a service group, one or more servers, and one or more monitors. The device 402 can determine and identify configurations having common configuration objects 412 to generate a configuration pattern 422. The configuration objects 412 can include a set of instructions 414 or arguments to allow the device 402 and/or a user (e.g., customer, administrator) to configure, modify or otherwise form the respective configuration object 412. In some embodiments, the configuration objects 412 can include arguments such as, but not limited to, a name, an identifier, an IP address, and/or a port number. In some embodiments, the set of arguments of the configuration object 412 types that form a configuration pattern 422 can form or be the same as the set of arguments for a configuration pattern 422. In some embodiments, a configuration pattern 422 can include, but not limited to, content-switching, authentication, and/or content policies. The device 402 can generate configuration patterns 422 for each of the different features or functions of an application delivery controller 460. For example, the device 402 can generate a configuration pattern 422 for features such as but not limited to, content switching, authentication, content policies, health monitoring, and/or application services. In embodiments, the configuration patterns 422 can include or correspond to building blocks for configurations and/or compositions of existing configuration instances 410 or patterns in order to capture more complex configurations.

Referring now to operation (510), and in some embodiments, an initial configuration template 424 can be generated. The initial configuration template 424 can include a baseline template or a template generated using configuration data stored at the device 402 or at least one application delivery controller 460. In embodiments, the device 402 can generate an initial configuration template 424 using one or more configuration patterns 422. For example, the configuration template 424 can include a configuration pattern 422. The device 402 can generate the configuration template 424 using one or more configuration objects 412 forming a configuration pattern 422. In embodiments, the device 402 can generate the configuration template 424 using each of the configuration objects 412 forming a configuration pattern 422. In one embodiments, the device 402 can generate, form or build a configuration template 424 that mirrors, is the same as or is substantially similar to one or more configuration patterns 422. In some embodiments, the device 402 can generate, for each configuration pattern 422, at least one configuration template 424. In embodiments, the device 402 can generate or form a variety of different configuration templates 424 using one or more configuration patterns 422 by varying one or more configuration objects 412 and/or varying one or more parameter 426 values.

Referring now to operation (515), and in some embodiments, a mapping file 428 can be generated. In embodiments, the device 402 can generate a mapping file 428. The mapping file 428 can include or correspond to a mapping or association between one or more instructions 414 or arguments of at least one configuration pattern 422 and one or more parameters 426 of a configuration template 424. For example, the device 402 can generate an association for one or more arguments of at least one configuration pattern 422 to one or more parameters 426 of a configuration template 424 and include the association as a mapping file 428. The device 402 can generate an association for each argument of at least one configuration pattern 422 to at least one parameter 426 of a configuration template 424 and include the association as a mapping file 428. In some embodiments, the device 402 can generate the mapping file 428 to identify an association or relationship between a set of instructions 414 associated with at least one configuration instance 410 (or configuration pattern 422) and one or more parameters 426 of a configuration template 424.

The mapping file 428 can provide flexibility in generating or structuring parameters 426 of a configuration template 424. For example, the device 402 can use the mapping file 428 to organize related or similar arguments (e.g., instructions 414) from one or more configuration patterns 422 into parameter groups. The parameter groups can include arguments that are the same, the same type and/or are related. In embodiments, the device 402 can use the mapping file 428 to generate or structure parameters 426 of a configuration template 424 having a different structure or design from one or more other (e.g., different) configuration templates 424. For example, the device 402 can generate parameters 426 for a first configuration template 424 having a first structure and generate parameters 426 for a second configuration template 424 having a second, different structure. The device 402 can select the parameters 426 based on an association between the selected parameters 426 and one or more instructions 414 identified in the mapping file 428.

The first configuration template 424 and the second configuration template 424 can include the same parameters 426. In some embodiments, the first configuration template 424 and the second configuration template 424 can include one or more different parameters 426. The device 402 can initially generate or build configuration templates 424 with the one or more configuration patterns 422, the set of arguments for the one or more configuration patterns 422, and the one or more mapping files 428. For example, the device 402 can use a mapping file 428 to identify associations between a set of arguments (e.g., instructions 414) and one or more configuration patterns 422. The device 402 can select the configuration patterns 422 identified in the mapping 428 for the configuration template 424. The device 402 can use the initial baseline configuration templates 424 to integrate configurations from client 440 that may have been manually generated and/or generated using different configurations tools, code or software. For example, the configuration templates 424 can be updated or modified using configuration instances 410 received from one or more clients 440 to allow a client 440 to integrate their existing configurations with configuration instances provided by the device 402, one or more application delivery controllers 460 and/or one or more servers 450.

Referring now to operation (520), and in some embodiments, a configuration instance 410 can be identified. In embodiments, the device 402 can identify a configuration instance 410 for a first application delivery controller 460 intermediary to a first plurality of clients 440 and a first plurality of servers 450. In some embodiments, the device 402 can identify a configuration instance 410 from a client 440, generated by a client 440 or used by a client 440. The configuration instance 410 can include a plurality of configuration objects 412. In embodiments, each configuration object 412 can include a set of instructions 414 for managing network traffic between the first plurality of clients 440 and the first plurality of servers 450 for a plurality of applications 452. A configuration instance 410 can include or correspond to an example of a configuration or example of a set of configuration parameters. A configuration instance 410 can include or correspond to an existing occurrence of a configuration or an existing occurrence of a set of configuration parameters. In embodiments, a configuration instance 410 can include or correspond to a single instance of a configuration or instance of configuration parameters. The configuration instance 410 can include or correspond to an existing configuration of an application delivery controller 460.

In embodiments, the device 402 can connect to an existing or running application delivery controller 460. For example, the device 402 can connect to an existing or running application delivery controller 460 using an application programming interface (API). The device 402 can read or retrieve the configuration data for the application delivery controller 460 from the application delivery controller. In some embodiments, the device 402 can transmit a request for configuration data (e.g., configuration instance 410) for the application delivery controller 460 to one or more application delivery controllers 460. The one or more application delivery controllers 460 can transmit a response including the configuration data, at least one configuration instance 410, and/or parameters 426 to the device 402. In some embodiments, a user (e.g., administrator) can provide the device 402 with a set of commands including the configuration instance 410. In one embodiments, a user (e.g., administrator) can provide the device 402 through a set of ADC computer-line interface (CLI) commands including the configuration instance 410. The device 402 can identify one or more configuration instances 410 from the configuration data. In embodiments, the device 402 can identify a plurality of configuration instances 410.

The configuration instance 410 can include one or more configuration objects 412. The device 402 can identify the configuration objects 412 of the configuration instance 410. The device 402 can identify an object type for each of the configuration objects 412. For example, the device 402 can identify configuration objects 412 types, such as but not limited to, a load balancing server, a service group, a set of service group members, and/or one or more monitors for the configuration instance 410. The device 402 can identify a set of instructions 414 for the configuration objects 412. In some embodiments, the set of instructions 414 can include or correspond to a set of arguments for a configuration object 412. The set of instructions 414 can be used by the device and/or a user to form a configuration object 412. The set of instructions 414 can be used to manage network traffic between one or more clients 440 and one or more servers 450 providing one or more applications 452. The device 402 can identify instructions 414, including but not limited to a name of an object 412, an identifier for an object 412, one or more IP addresses, and/or one or more port numbers. In embodiments, the IP addresses can include one or more IP addresses for the application delivery controller 460 the configuration instance 410 was received from and/or one or more IP addresses of one or more servers 450. In embodiments, the port numbers can include one or more port numbers of the application delivery controller 460 the configuration instance 410 was received from and/or one or more port numbers of one or more servers 450.

Referring now to operation (525), and in some embodiments, a subset of configuration objects 416 can be selected. In embodiments, the device 402 can select a subset of configuration objects 416 from the plurality of configuration objects 412 based on the set of instructions 414 in each configuration of the plurality of configuration object 412. The device 402 can select a subset of configuration objects 416 that can be used for other different configuration instances 410. The device 402 can select a subset of configuration objects 416 that can be used for one or more application delivery controllers 460 and/or servers 450. The subset of configuration objects 416 can include objects 416 that are used in or common to multiple configuration instances 410. The subset of configuration objects 416 can include a portion of a configuration or correspond to a configuration pattern 422. For example, a first subset of configuration objects 416, can include but not limited to, configuration objects 412 for a load balancing configuration pattern 422 including a load balancing server, one or more servers, individual services, and one or more monitors. The subset of configuration objects 416 can vary and be selected based in part on one or more instructions 414 or one or more configuration object types. In some embodiments, the device 402 can select a subset of configuration objects 416 based in part on an instruction from a user (e.g., administrator) provided to the device 402 through a user interface.

Referring now to operation (530), and in some embodiments, instructions 414 can be removed. In embodiments, the device 402 can remove from each configuration object 412 of the subset of configuration objects 416, instance-specific instructions 414 from the set of instructions 414 for the first application delivery controller 460. The device 402 can identify instructions 414 that are specific to a particular or unique configuration instance 410. The device 402 can determine that the instructions 414 are instance-specific instructions 414 and identified in a single configuration instance 410. In some embodiments, the device 402 can determine that the instance-specific instructions 414 are unique to a single configuration instance of a first application delivery controller and remove, responsive to the determination, the instance-specific instructions 414. The device 402 can remove the instructions 414 that are specific to a particular or unique configuration instance 410 from one or more configuration objects 416 included within the set of configuration objects 416. In some embodiments, the device 402 can remove instructions 414 such as, but not limited to, network settings, IP addresses, virtual LAN information, cluster information (e.g., high-availability cluster information) and/or cluster configuration data. In some embodiments, the device 402 can remove a subset of configuration objects 416 from the plurality of configuration objects 412 based on the set of instructions 414 in each configuration of the plurality of configuration object 412.

Referring now to operation (535), and in some embodiments, a configuration graph 418 can be generated. In embodiments, the device 402 can generate, in accordance with the subset of configuration objects 416 with the instance-specific instructions 414 removed, a configuration graph 418 for each application 452 of the plurality of applications 452 identified in the subset of configuration objects 416. The subset of configuration objects 416 can identify one or more applications 452 hosted by or provided by one or more servers 450. The device can generate at least one configuration graph 418 for a subset of configuration objects 416. In embodiments, the device 402 can generate two or more configuration graphs 418 for a subset of configuration objects 412. A configuration graph 418 can include a graph of an application 452 configuration. A configuration graph 418 can include associations or relationships between different configuration objects 412 or configuration entities of an application 452 identified in the subset of configuration objects 416. The configuration graph 418 can include a graph illustrating a relation between one or more servers 450, one or more services, one or more configuration objects 412, and/or one or more applications 452. In some embodiments, the device 402 can use information or data from one or more application delivery controllers 460 to generate the configuration graphs 418. For example, the device 402 can identify and use configuration metadata from one or more application delivery controllers 460 to generate the configuration graphs 418.

Referring now to operation (540), and in some embodiments, a match 420 can be determined. In embodiments, to make a determination on matches 420, the device 402 can compare a configuration graph 418 to one or more configuration patterns 422. In some embodiments, the device 402 can compare each configuration graph 418 to one or more configuration patterns 422. The device 402 can identify if a configuration graph 418 matches at least one configuration pattern 422. In embodiments, a match 420 can include a configuration graph 418 having one or more configuration objects 412 in common and/or one or more instructions 414 in common with a configuration pattern 422.

Referring now to operation (545), and in some embodiments, a match 420 can be identified. In embodiments, a device 402 can identify, for each application 452 identified in the subset of configuration objects 412, a match 420 of at least a portion of the configuration graph 418 and a configuration pattern 422 of a plurality of configuration patterns 422. Each configuration pattern 422 can be used for generating instructions 414 for managing network traffic for the application 452. The device 402 can identify one or more portions of a configuration graph 418 that match, are the same as or similar to at least one configuration pattern 422. For example, the device 402 can identify one or more configuration objects 412 that match, are the same as or similar to one or more configuration objects 412 included within a configuration pattern 422. The device 402 can identify one or more instructions 414 that match, are the same as or similar to one or more instructions 414 included within a configuration pattern 422. The device 402 can identify one or more parameters 426 that match, are the same as or similar to one or more parameters 426 included within a configuration pattern 422.

Referring now to operation (550), and in some embodiments, a mapping file 428 can be determined. In embodiments, responsive to determining a match 420, the device 402 can determine a mapping file 428 associated with the matching configuration pattern 422. The device 402 can identify a mapping file 428 for each configuration pattern 422 that matched with a portion of the configuration graph 418. The mapping file 428 can include or describe a mapping between one or more instructions 414 (e.g., arguments) of configuration pattern 422 and one or more parameters 426 of a configuration template 424. In some embodiments, each configuration pattern 422 can include or correspond to at least one mapping file 428. The mapping file 428 can used to generate or build a configuration template 424 that is compatible with one or more different types of configuration instances 410. The mapping file 428 can used to generate or build a configuration template 424 that can integrate one or more different types of configuration instances 410. For example, the mapping file 428 can used to structure parameters 426 of a configuration template 424 such that the parameters 426 can vary from one or more configuration instances 410 and can be used to generate the respective configuration instances 410.

Referring now to operation (555), and in some embodiments, a configuration template 424 can be generated. In embodiments, the device 402 can generate, using the identified configuration patterns 422, a configuration template 424 for a second application delivery controller 460 intermediary to a second plurality of clients 440 and a second plurality of servers 450. The configuration template 424 can include a set of parameters 426 to configure the second application delivery controller 460 to generate instructions 414 for managing network traffic for the applications 452 identified in the subset of configuration objects 412. The device 402 can generate the configuration template 424 to include at least one configuration pattern 422. The device 402 can generate the configuration template 424 to include two or more configuration patterns 422. The device 402 can generate the configuration template 424 using one or more configuration patterns 422 that matched 420 with one or more portions of the configuration graph 418.

In embodiments, the configuration template 424 can continually compare configuration graphs 418 to one or more configuration patterns 422 to determine matches. Once each of the configuration graphs 418 have been matched to at least one configuration pattern 422, the device 402 can generate a configuration template 424. For example, responsive to comparing one or more configurations graphs 418 to one or more patterns 422, the device 402 can generate a dynamic configuration template 424. The configuration template 424 can integrate a plurality of patterns 422 together or combine a plurality of patterns 422 to generate a configuration template 424 for a client 440 or multiple clients 440. The device 402 and/or one or more clients 440 can use the configuration template to central manage a plurality of configurations.

The device 402 and/or one or more clients 440 can use the configuration template 424 to integrate existing configurations generated using different methods and/or different configuration tools. For example, in embodiments, clients 440 can convert existing configuration instances 410 into one or more configuration templates 424 using method 500. The configuration template 424 can be used to centrally manage a plurality of existing configurations and generate new configuration instances 410 without having to rewrite parameters or instructions. For example, the device 402 and/or clients 440 can use the configuration template 424 to generate new configuration instances 410 by modifying one or more parameter 426 values of the configuration template 424 to generate one or more new configuration instance 410 for an application delivery controller 460. In embodiments, device 402 and/or clients 440 can use the configuration templates 424 to move configurations to configuration instances 410 between different public and/or private clouds, and/or provide updates to existing configuration instances 410. The device 402 and/or clients 440 can use the configuration templates 424 to re-generate a previous, existing or current configuration and generate similar variations of the same or similar configuration (e.g., configurations that use the same configuration pattern).

In embodiments, the device 402 can deploy one or more configuration instances 410 for one or more application delivery controllers 460 using the configuration template 424. For example, the device 402 can modify one or more parameters 426 of the set of the parameters 426 of the configuration template 424 to build or generate a new configuration instance 410 of the respective application delivery controller 460. The device can deploy the new configuration instance of the application delivery controller 460 in a first network 104 (e.g., private cloud, public cloud). The application delivery controller 460 can manage network traffic for the applications 452 in the first network 104 based in part on the modified set of parameters 426 of the new configuration instance 410. In embodiments, the device 402 can migrate a configuration instance 410 of an application delivery controller 460 from a first network 104 to a second different network 104 using the configuration template 424 and/or by modifying one or more parameters 426 of the configuration template 424 or a configuration instance 410. For example, the device 402 can modify at least one parameter 426 of the set of the parameters 426 of the configuration instance 410 of the application delivery controller 460 from a first value indicating a first network 104 to a second value indicating a second network 104. The device 402 can migrate the configuration instance 410 of the application delivery controller 460 from the first network 104 to the second network 104 using the configuration template 424 and the modified at least one parameter 426 of the set of the parameters 426.

Various elements, which are described herein in the context of one or more embodiments, may be provided separately or in any suitable subcombination. For example, the processes described herein may be implemented in hardware, software, or a combination thereof. Further, the processes described herein are not limited to the specific embodiments described. For example, the processes described herein are not limited to the specific processing order described herein and, rather, process blocks may be re-ordered, combined, removed, or performed in parallel or in serial, as necessary, to achieve the results set forth herein.

It should be understood that the systems described above may provide multiple ones of any or each of those components and these components may be provided on either a standalone machine or, in some embodiments, on multiple machines in a distributed system. The systems and methods described above may be implemented as a method, apparatus or article of manufacture using programming and/or engineering techniques to produce software, firmware, hardware, or any combination thereof. In addition, the systems and methods described above may be provided as one or more computer-readable programs embodied on or in one or more articles of manufacture. The term "article of manufacture" as used herein is intended to encompass code or logic accessible from and embedded in one or more computer-readable devices, firmware, programmable logic, memory devices (e.g., EEPROMs, ROMs, PROMs, RAMs, SRAMs, etc.), hardware (e.g., integrated circuit chip, Field Programmable Gate Array (FPGA), Application Specific Integrated Circuit (ASIC), etc.), electronic devices, a computer readable non-volatile storage unit (e.g., CD-ROM, USB Flash memory, hard disk drive, etc.). The article of manufacture may be accessible from a file server providing access to the computer-readable programs via a network transmission line, wireless transmission media, signals propagating through space, radio waves, infrared signals, etc. The article of manufacture may be a flash memory card or a magnetic tape. The article of manufacture includes hardware logic as well as software or programmable code embedded in a computer readable medium that is executed by a processor. In general, the computer-readable programs may be implemented in any programming language, such as LISP, PERL, C, C++, C#, PROLOG, or in any byte code language such as JAVA. The software programs may be stored on or in one or more articles of manufacture as object code.

While various embodiments of the methods and systems have been described, these embodiments are illustrative and in no way limit the scope of the described methods or systems. Those having skill in the relevant art can effect changes to form and details of the described methods and systems without departing from the broadest scope of the described methods and systems. Thus, the scope of the methods and systems described herein should not be limited by any of the illustrative embodiments and should be defined in accordance with the accompanying claims and their equivalents.

It will be further understood that various changes in the details, materials, and arrangements of the parts that have been described and illustrated herein may be made by those skilled in the art without departing from the scope of the following claims.

## Claims

1. A method of generating configuration templates, comprising:
identifying, by a device, a configuration instance for a first application delivery controller intermediary to a first plurality of clients and a first plurality of servers, the configuration instance having a plurality of configuration objects, each configuration object having a set of instructions for managing network traffic between the first plurality of client and the first plurality of servers for a plurality of applications;
selecting, by the device, a subset of configuration objects from the plurality of configuration objects in accordance with the set of instructions in each configuration of the plurality of configuration objects;
removing, by the device, from each configuration object of the subset, instance-specific instructions from the set of instructions for the first application delivery controller;
generating, by the device, in accordance with the subset of configuration objects with the instance-specific instructions removed, a configuration graph for each application of the plurality of applications identified in the subset;
identifying, by the device, for each application identified in the subset, a match of at least a portion of the configuration graph and a configuration pattern of a plurality of configuration patterns; and
generating, by the device, using the identified configuration pattern, a configuration template for a second application delivery controller intermediary to a second plurality of clients and a second plurality of servers, the configuration template having a set of parameters to configure the second application delivery controller to generate instructions for managing the network traffic for the plurality of applications identified in the subset.

2. The method of claim 1, further comprising:
modifying, by the device, one or more parameters of the set of the parameters of the configuration template to generate a configuration instance of the second application delivery controller.

3. The method of claim 2, further comprising:
deploying, by the device, the configuration instance of the second application delivery controller in a first network, the second application delivery controller managing network traffic for the applications in the first network.

4. The method of claim 2, further comprising:
modifying, by the device, at least one parameter of the set of the parameters of the configuration instance of the second application delivery controller from a first value indicating a first network to a second value indicating a second network; and
migrating, by the device, the configuration instance of the second application delivery controller from the first network to the second network using the configuration template and the modified at least one parameter of the set of the parameters.

5. The method of claim 1, further comprising:
identifying, by the device, one or more configuration patterns of the plurality of configuration patterns having configurations objects used in configurations instances of two or more application delivery controllers.

6. The method of claim 1, further comprising:
generating, by the device, a mapping file identifying an association between the set of instructions associated with the configuration instance and the set of parameters of the configuration template.

7. The method of claim 1, further comprising:
generating, by the device, the configuration parameters for the configuration template using the mapping file.

8. The method of claim 1, further comprising:
determining, by the device, that the instance-specific instructions are unique to the single configuration instance of the first application delivery controller; and
removing, by the device and responsive to the determination, the instance-specific instructions.

9. The method of claim 1, further comprising:
comparing, by the device, the configuration graph to one or more configuration patterns of the plurality of configuration patterns; and
determining, by the device, the portion of the configuration graph includes configuration objects of the subset of configuration objects in common with the identified configuration pattern of the plurality of configuration patterns.

10. A system for generating configuration templates, the system comprising:
a device having one or more processors coupled to a memory and intermediary to a first plurality of clients, a first plurality of servers, and a first application delivery controller; and
the first application delivery controller intermediary to the first plurality of clients and the first plurality of servers;
the device configured to implement the method of any one of claims 1 to 9.

11. A non-transitory computer readable medium storing instructions when executed by one or more processors cause the one or more processors to implement the method of any one of claims 1 to 9.
